# EUROPEAN PATENT SPECIFICATION

(11) **EP 3 225 899 B1**
(45) Date of publication and mention of the grant of the patent: **27.03.2019**
(21) Application number: 16169273.6
(22) Date of filing: 12.05.2016
(51) Int. Cl.: F16N 3/12, B05B 11/00, B05B 9/08, B65D 83/00, B65D 83/14

(54) **GREASE STICK CONNECTION DEVICE OF GREASE GUN**
FETTSTÜCKVERBINDUNGSVORRICHTUNG EINER FETTPRESSE
DISPOSITIF DE CONNEXION POUR BÂTON DE GRAISSE DE PISTOLET GRAISSEUR

(30) Priority: 31.03.2016 TW 105204480
(43) Date of publication of application: 04.10.2017
(73) Proprietor: King Cho Machinery Industrial Co., Ltd., Taichung City (TW)
(72) Inventor: HUNG, Fu Tien, Taichung City (TW)
(74) Representative: Cabinet Chaillot

(56) References cited:
- TW-U- M 499 511
- US-A- 3 813 012

## Description

### BACKGROUND OF THE INVENTION

### 1. Fields of the invention

The present invention relates to a grease gun, and more particularly, to a grease stick connection device of a grease gun so as to be cooperated with the grease sticks of different sizes.

### 2. Descriptions of Related Art

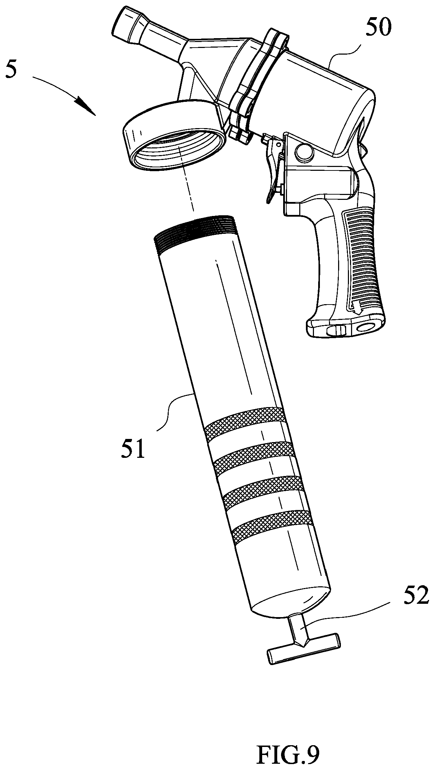

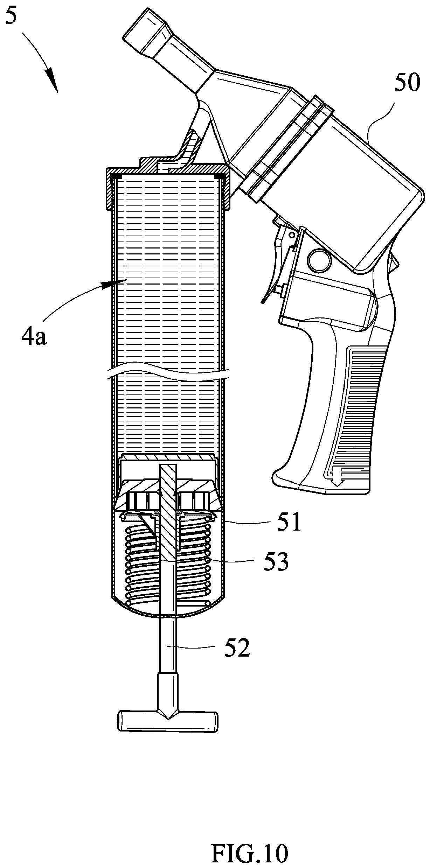

The conventional grease guns are used to lubricate moving parts of machine and one of the conventional grease guns 5 known to applicant is disclosed in Figs. 9 and 10, and comprises a body 50 which includes a tube 51 in which a rod 52 and a spring 53 are received. A grease stick 4a is inserted into the tube 51 and the tube 51 is connected to the body 50.

The spring 53 provides a force to the grease stick 4a toward the body 50 and the user pushes the rod 52 to move a piston in the tube 51 and to squeeze the grease from the grease stick 4a into the body 50 to be applied to the machine parts.

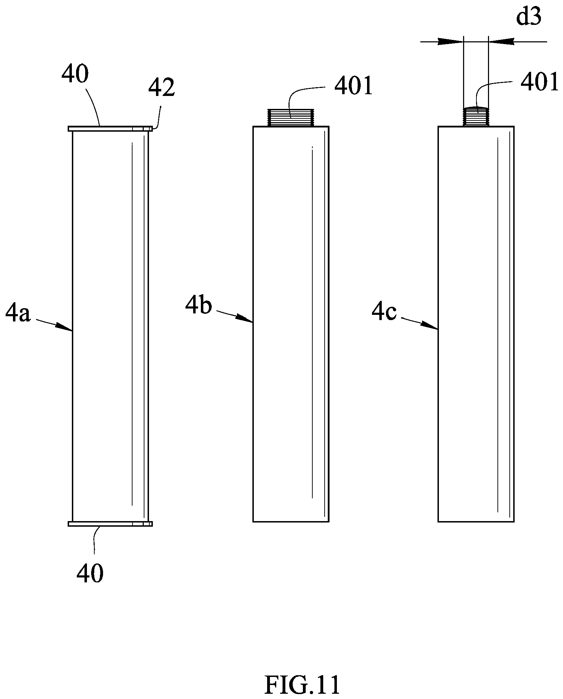

As shown in Fig. 11, the existed grease sticks are cataloged into three different types, wherein the grease sticks 4a includes a top cover 40 and a bottom cover 40 . The top and bottom covers 40, 40 have to be removed before the grease stick 4a is inserted into the tube 51. The second grease stick 4b includes a connection neck 401 on the top thereof, and the connection neck 401 has outer threads so as to be connected to the body 51 of the grease gun 5.

The third grease stick 4c includes a connection neck 401 which is smaller than the second one and has outer threads so as to be connected to the body 51 of the grease gun 5. In other words, because of the sizes of the greases sticks 4a, 4b, 4c are different so that the grease guns 5 that are cooperated with the individual greases sticks 4a, 4b, 4c are different.

The present invention intends to provide a grease stick connection device of a grease gun so as to be connected with the grease sticks of different sizes.

TW M 499 511 U discloses a grease gun having a body having a connection ring with which two kinds of grease stick can cooperate.

### SUMMARY OF THE INVENTION

The present invention relates to a grease gun and comprises a body having a path connected thereto, and a connector is connected to the distal end of the path. Multiple first inner threads are defined in the inner periphery of the connector, and a groove is defined in the inner periphery of the connector. A connection ring has a flange and a neck extends from the underside of the flange. A stepped hole is defined in the connection ring and composed of a first hole and a second hole which is smaller than the first hole and co-axially communicates with the first hole. The first hole has second inner threads defined in the inner periphery thereof. The flange is received in the connector. An adapter is connected to the second inner threads of the connection ring. A tube has first outer threads defined in the first end thereof. The first outer threads of the tube are threadedly connected to the first inner threads of the connector. A piston is adapted to be located in a bottom end of a grease stick in the tube and located corresponding to the second end of the tube.

Preferably, the connection ring has a first reception room defined in the top thereof. A first seal is received within the first reception room and the groove.

Preferably, the second inner threads of the connection ring are adapted to be threadedly connected to the grease stick. The inner diameter of the first inner threads in the connector is larger than the outer diameter of the first outer threads of the path.

Preferably, the outer diameter of the flange of the connector is larger than the inner diameter of the path. The flange has outer threads defined in the outer periphery thereof, and multiple ribs extend from the underside of the flange and the neck extending from the flange.

Preferably, the groove of the connector is adapted to be connected with a top flange of a grease stick.

According to the invention, the adapter has second outer threads defined in the outer periphery thereof, and third inner threads are defined in the inner periphery of the adapter. The second outer threads of the adapter are connected to the second inner threads of the connection ring.

Preferably, the inner diameter of the second inner threads of the connection ring is larger than the outer diameter of the second outer threads of the adapter. The inner diameter of the third inner threads of the adapter is adapted to be larger than the outer diameter of the connection neck of the grease stick.

Preferably, the adapter has a second reception room defined in the top thereof with which a second seal is engaged.

According to the invention, the third inner threads of the adapter are threadedly connected with the grease stick.

Preferably, the piston has a skirt portion which is adapted to be snugly in contact with an inside of the grease stick.

The primary object of the present invention is to provide a grease gun wherein the connection ring and the adapter of the present invention are easily connected to the existed conventional grease guns so that the grease sticks of different sizes can be used.

Another object of the present invention is to provide a grease gun wherein the connection ring and the adapter of the present invention are respectively cooperated with a first seal and a second seal so as to prevent leak when using the grease sticks of different sizes.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is an exploded view of the grease gun of the present invention, and the grease stick to be used with the grease gun;
Fig. 2 is a cross sectional view to show the connection ring and the first seal;
Fig. 3 is a cross sectional view to show of the grease gun of the present invention, and the grease stick used with the grease gun;
Fig. 4 is an exploded view of the grease gun of the present invention, and another grease stick to be used with the grease gun;
Fig. 5 is a cross sectional view to show the adapter and the second seal;
Fig. 6 is a cross sectional view to show of the grease gun of the present invention, and the grease stick shown in Fig. 4 used with the grease gun;
Fig. 6a is a cross sectional view to show the connector, the connection ring, the adapter and the grease stick in Fig. 6;
Fig. 7 is an exploded view of the grease gun of the present invention, and yet another grease stick to be used with the grease gun;
Fig. 8 is a cross sectional view to show of the grease gun of the present invention, and the grease stick shown in Fig. 7 used with the grease gun;
Fig. 9 is an exploded view of a conventional grease gun;
Fig. 10 is a cross sectional view to show of the conventional grease gun in Fig. 9 and the grease stick used with the conventional grease gun, and
Fig. 11 shows three grease sticks of different sizes.

### DETAILED DESCRIPTION OF THE PREFERRED EMBODIMENT

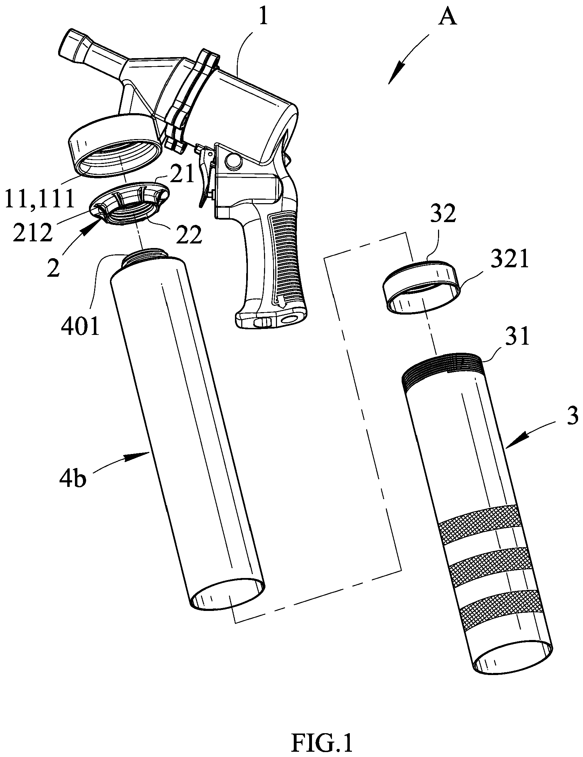

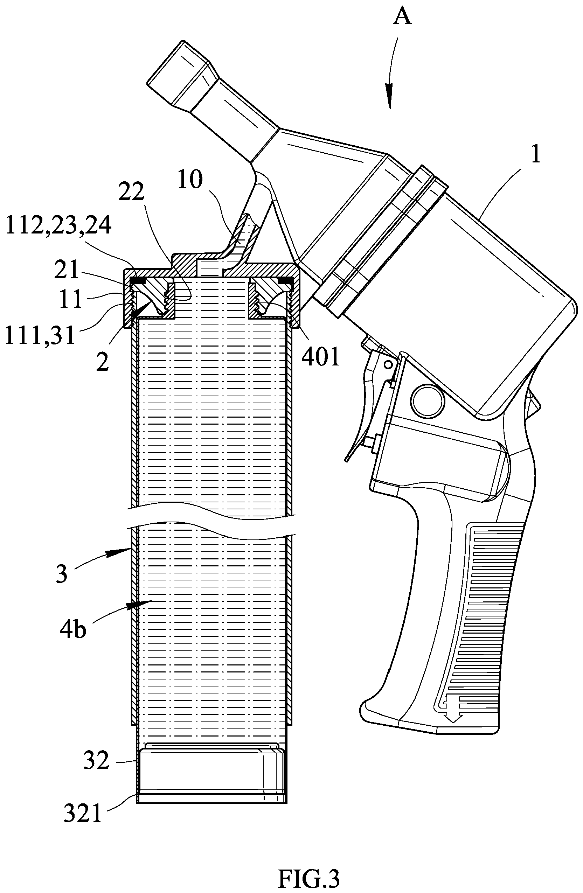

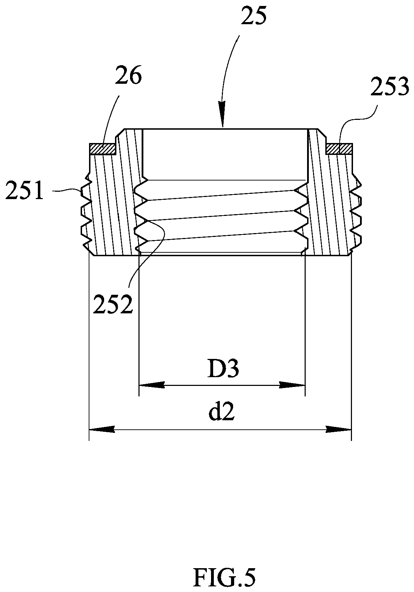

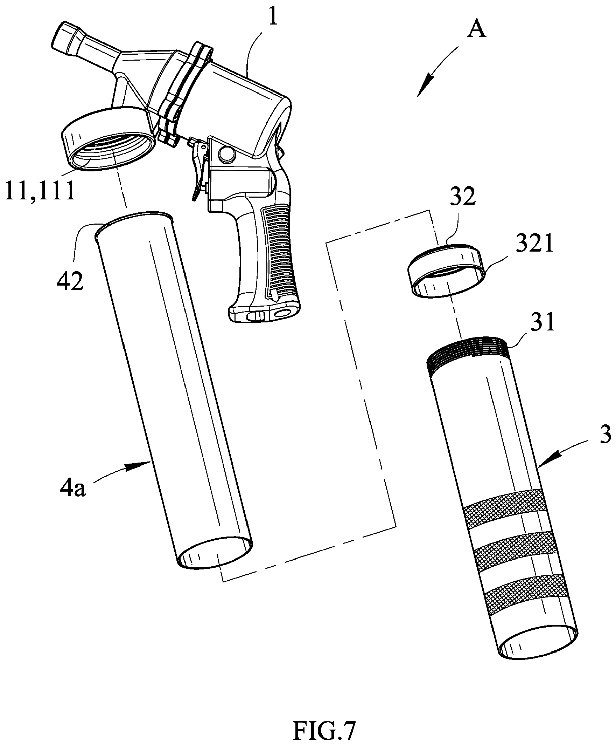

Referring to Figs. 1 to 8, the grease gun of the present invention comprises a body 1, a connection ring 2, an adapter 25 and a tube 3. The body 1, as shown in Fig. 3, comprises a path 10 connected thereto, and a connector is connected to the distal end of the path 10. Multiple first inner threads 111 are defined in the inner periphery of the connector 11, and a groove 112 is defined in the inner periphery of the connector 11.

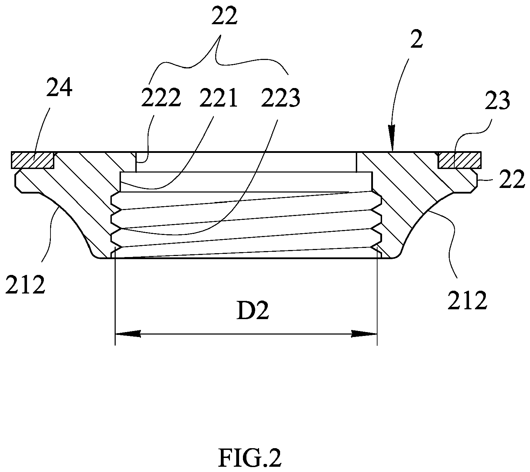

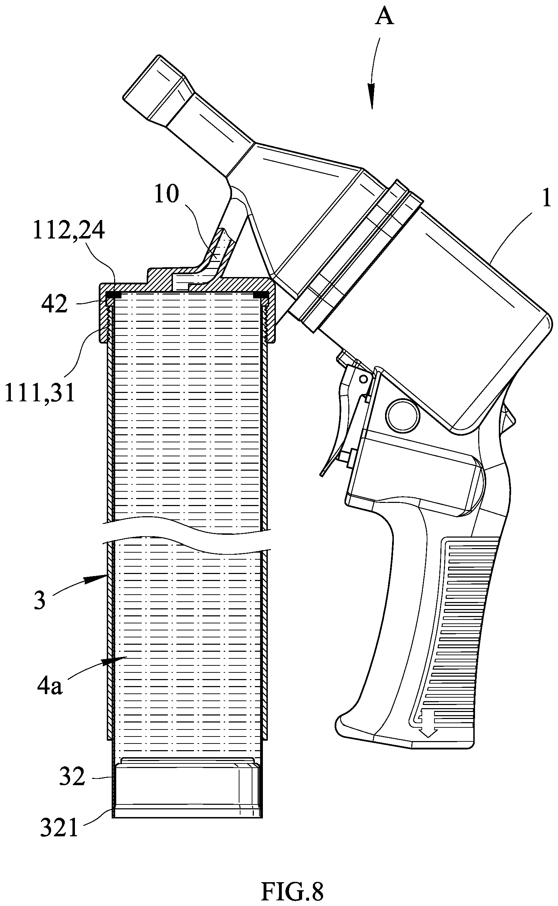

The connection ring 2, as shown in Figs. 2 and 3, has a flange 21 and a neck extends from the underside of the flange 21. Multiple ribs 212 extend from the underside of the flange 21 and the neck extending from the flange 21. The flange 21 has outer threads 211 defined in the outer periphery thereof. A stepped hole 22 is defined in the connection ring 2 and composed of a first hole 221 and a second hole 222 which is smaller than the first hole 221 and co-axially communicates with the first hole 221. The first hole 221 has second inner threads 223 defined in the inner periphery thereof. The flange 21 is received in the connector 11. The connection ring 2 has a first reception room 23 defined in the top thereof. A first seal 24 is received within the first reception room 23 and the groove 112. The second inner threads 223 of the connection ring 2 are threadedly connected to the connection neck 401 on the top of the grease stick 4b as shown in Figs. 3 and 11. When the connection ring 2 is removed, the groove 112 of the connector 11 is able to be connected with a top flange 42 of a grease stick 4a as shown in Fig. 8.

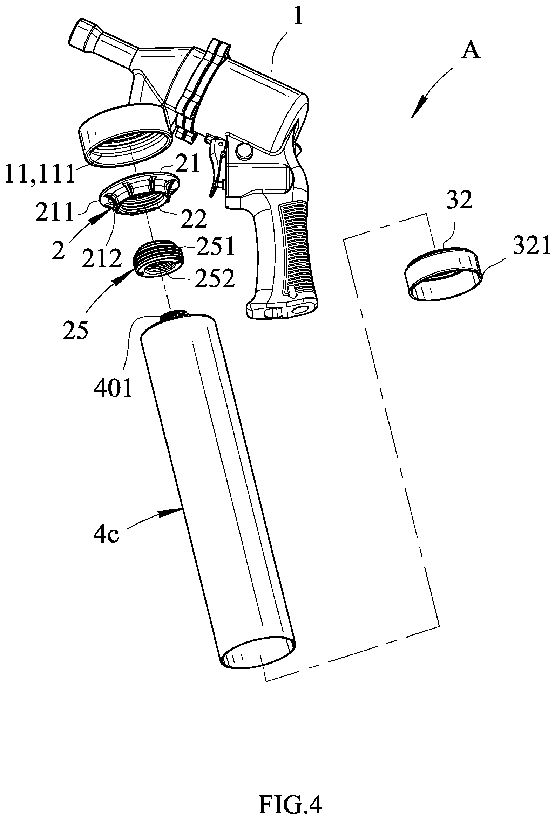

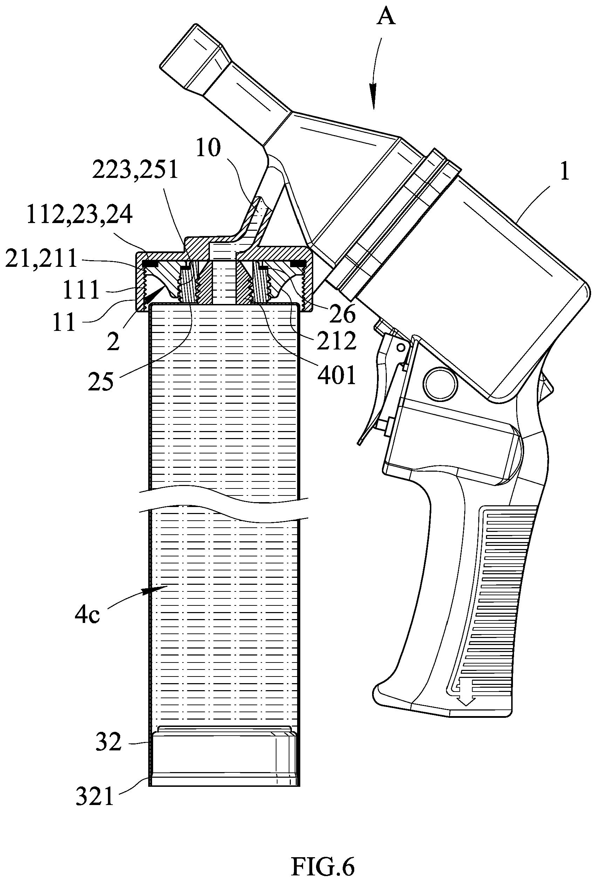

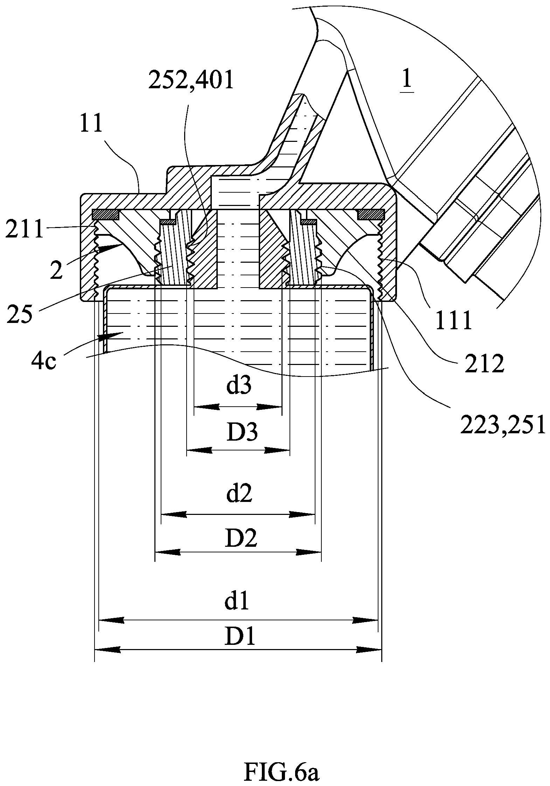

The adapter 25 is connected to the second inner threads 223 of the connection ring 2. The adapter 25 has second outer threads 251 defined in the outer periphery thereof, and third inner threads 252 are defined in the inner periphery of the adapter 25. The second outer threads 251 of the adapter 25 are connected to the second inner threads 223 of the connection ring 2. The adapter 25 has a second reception room 253 defined in the top thereof with which a second seal 26 is engaged. As shown in Figs. 4 and 6, the third inner threads 252 of the adapter 25 are 2 used to be threadedly connected with the connection neck 401 on the top of the grease stick 4c which is shown in Fig. 11. It is noted that as shown in Fig. 6a, the inner diameter D1 of the first inner threads 111 in the connector 11 is larger than the outer diameter d1 of the first outer threads 31 of the path 3. The inner diameter D2 of the second inner threads 223 of the connection ring 2 is larger than the outer diameter d2 of the second outer threads 251 of the adapter 25. The inner diameter D3 of the third inner threads 252 of the adapter 25 is larger than the outer diameter d3 of the connection neck 401 of the grease stick 4c. The inner diameter D1 is larger than the D2 which is larger than the D3. The outer diameter d1 larger than the d2 which is larger than the d3.

As shown in Figs. 3, 6 and 8, the tube 3 has first outer threads 31 defined in the first end thereof. The outer diameter of the flange 21 of the connector 2 is larger than the inner diameter of the path 3. The first outer threads 31 of the tube 3 are threadedly connected to the first inner threads 111 of the connector 11. A piston 32 is to be located in a bottom end of a grease stick 4a/4b/4c in the tube 3 and located corresponding to the second end of the tube 3. The piston 32 has a skirt portion 321 which is snugly in contact with the inside of the grease stick 4a/4b/4c.

When in use, the tube 51, the rod 52 and the spring 53 are removed from the conventional grease gun, and the body 50 is the same as the body 1 of the present invention.

When the grease stick 4b is to be used, as shown in Fig. 3, the connection ring 2 is connected to the connector 11 and the first outer threads 31 of the tube 3 are connected to the first inner threads 111 of the connector 11. The connection neck 401 of the grease stick 4b is threadedly connected to the second inner threads 223 of the connection ring 2, and the top end of the grease stick 4b contacts against the first seal 24. After the grease gun 1 is operated to eject the grease in the grease stick 4b, the grease in the grease stick 4b will be pushed by the piston 32 which is pushed by the atmosphere pressure according to the principle of Venturi, so that the grease in the grease stick 4b can be continuously ejected from the grease gun 1.

When the grease stick 4c is to be used, as shown in Fig. 6, the second outer threads 251 of the adapter 25 are connected to the second inner threads 223 of the connection ring 2, and the adapter 25 contacts the second ring 26. The connection ring 2 and the adapter 25 are both connected to the connector 11. The ribs 212 of the connection ring 2 are cooperated with a tool to rotate the outer threads 211 of the connection ring 2 to be connected to the first inner threads 11 of the connector 11. The connection neck 401 of the grease stick 4c is threadedly connected to the third inner threads 252 of the adapter 25. After the grease gun 1 is operated to eject the grease in the grease stick 4c, the grease in the grease stick 4c will be pushed by the piston 32 which is pushed by the atmosphere pressure according to the principle of Venturi, so that the grease in the grease stick 4c can be continuously ejected from the grease gun 1.

When the grease stick 4a is to be used, as shown in Fig. 8, the connection ring 2 and the adapter 25 are removed from the connector 11. The grease stick 4a is directly inserted into the connector 11, and the top flange 42 of the grease stick 4a is engaged with the groove 112 in the connector 2. The first outer threads 31 are connected to the first inner threads 11 in the connector 11, the top of the tube 3 contacts the top flange 42 and the first seal 24. After the grease gun 1 is operated to eject the grease in the grease stick 4a, the grease in the grease stick 4a will be pushed by the piston 32 which is pushed by the atmosphere pressure according to the principle of Venturi, so that the grease in the grease stick 4a can be continuously ejected from the grease gun 1.

While we have shown and described the embodiment in accordance with the present invention, it should be clear to those skilled in the art that further embodiments may be made without departing from the scope of the present invention.

## Claims

1. A grease gun with which grease sticks of different sizes are able to cooperate, said grease gun comprising:
a body (1) having a path (10) connected thereto, a connector (11) connected to a distal end of the path (10), first inner threads (111) defined in an inner periphery of the connector (11), a groove (112) defined in the inner periphery of the connector (11);
a connection ring (2) having a flange (21) and a neck extending from the flange (21), a stepped hole (22) defined in the connection ring (2) and composed of a first hole (221) and a second hole (222) which is smaller than the first hole (221), the first hole (221) having second inner threads (223) defined in an inner periphery thereof, the flange (21) being received in the connector (11); and
a tube (3) having first outer threads (31) defined in a first end thereof, the first outer threads (31) of the tube (3) being threadedly connected to the first inner threads (111) of the connector (11), a piston (32) adapted to be located in a bottom end of a grease stick in the tube (3), and located corresponding to a second end of the tube (3),
**characterized by** the fact that the grease gun further comprises an adapter (25) having second outer threads (251) defined in an outer periphery thereof and being adapted to be connected to the second inner threads (223) of the connection ring (2) and third inner threads (252) defined in an inner periphery thereof and being adapted to be threadedly connected with a grease stick (4c),
said second inner threads (223) of the connection ring (2) being adapted to be threadedly connected to a grease stick (4b) having a size different from that of the grease stick (4c).

2. The grease gun as claimed in claim 1, wherein the connection ring (2) has a first reception room (23) defined in a top thereof, a first seal (24) is received within the first reception room (23) and the groove (112).

3. The grease gun as claimed in claim 1, wherein the second inner threads (223) of the connection ring (2) are adapted to be threadedly connected to the grease stick (4b), an inner diameter (D1) of the first inner threads (111) in the connector (11) is larger than an outer diameter (d1) of the first outer threads (31) of the path (3).

4. The grease gun as claimed in claim 1, wherein an outer diameter of the flange (21) of the connector (2) is larger than an inner diameter of the path (3), the flange (21) has outer threads (211) defined in an outer periphery thereof, multiple ribs (212) extending from an underside of the flange (21).

5. The grease gun as claimed in claim 4, wherein the groove (112) of the connector (11) is adapted to be connected with a top flange (42) of a grease stick (4a).

6. The grease gun as claimed in claim 1, wherein an inner diameter (D2) of the second inner threads (223) of the connection ring (2) is larger than an outer diameter (d2) of the second outer threads (251) of the adapter (25), an inner diameter (D3) of the third inner threads (252) of the adapter (25) is adapted to be larger than an outer diameter (d3) of the connection neck (401) of the grease stick (4c).

7. The grease gun as claimed in claim 1, wherein the adapter (25) has a second reception room (253) defined in a top thereof with which a second seal (26) is engaged.

8. The grease gun as claimed in claim 1, wherein the piston (32) has a skirt portion (321) which is adapted to be snugly in contact with an inside of the grease stick (4a/4b/4c).

## Patentansprüche

1. Fettspritze, mit der Fettstangen verschiedener Größen zusammenwirken können, wobei die Fettspritze Folgendes umfasst:
einen Hauptteil (1) mit einem damit verbundenen Weg (10), einem Verbindungsstück (11), das mit einem distalen Ende des Weges (10) verbunden ist, ersten Innengewindegängen (111), die in einem Innenumfang des Verbindungsstücks (11) definiert sind, einer Kerbe (112), die in dem Innenumfang des Verbindungsstücks (11) definiert ist,
einen Verbindungsring (2) mit einem Flansch (21) und einem Hals, der sich von dem Flansch (21) aus erstreckt, einer gestuften Öffnung (22), die in dem Verbindungsring (2) definiert ist und aus einer ersten Öffnung (221) und einer zweiten Öffnung (222), die kleiner ist als die erste Öffnung (221), besteht, wobei die erste Öffnung (221) zweite Innengewindegänge (223) aufweist, die in ihrem Innenumfang definiert sind, wobei der Flansch (21) in dem Verbindungsstück (11) aufgenommen ist, und
eine Röhre (3) mit ersten Außengewindegängen (31), die in ihrem ersten Ende definiert sind, wobei die ersten Außengewindegänge (31) der Röhre (3) mit den ersten Innengewindegängen (111) des Verbindungsstücks (11) verschraubt sind, einen Kolben (32), der dafür eingerichtet ist, in einem unteren Ende einer Fettstange in der Röhre (3) positioniert zu sein, und der entsprechend einem zweiten Ende der Röhre (3) positioniert ist,
**dadurch gekennzeichnet, dass** die Fettspritze ferner einen Adapter (25) mit zweiten Außengewindegängen (251) umfasst, die in seinem Außenumfang definiert sind und dafür eingerichtet sind, mit den zweiten Innengewindegängen (223) des Verbindungsrings (2) und dritten Innengewindegängen (252) verbunden zu sein, die in seinem Innenumfang definiert sind und dafür eingerichtet sind, mit einer Fettstange (4c) verschraubt zu sein,
wobei die zweiten Innengewindegänge (223) des Verbindungsrings (2) dafür eingerichtet sind, mit einer Fettstange (4b) verschraubt zu sein, die eine andere Größe aufweist als die Fettstange (4c).

2. Fettspritze nach Anspruch 1, wobei der Verbindungsring (2) einen ersten Aufnahmeraum (23) aufweist, der in seinem oberen Teil gebildet ist, und eine erste Dichtung (24) in dem ersten Aufnahmeraum (23) und der Rille (112) aufgenommen ist.

3. Fettspritze nach Anspruch 1, wobei die zweiten Innengewindegänge (223) des Verbindungsrings (2) dafür eingerichtet sind, mit der Fettstange (4b) verschraubt zu sein, und ein Innendurchmesser (D1) der ersten Innengewindegänge (111) in dem Verbindungsstück (11) größer ist als ein Außendurchmesser (d1) der ersten Außengewindegänge (31) des Weges (3).

4. Fettspritze nach Anspruch 1, wobei ein Außendurchmesser des Flansches (21) des Verbindungsstücks (2) größer ist als ein Innendurchmesser des Weges (3), und der Flansch (21) Außengewindegänge (211) aufweist, die in seinem Außenumfang gebildet sind und sich mehrere Rippen (212) von einer Unterseite des Flansches (21) aus erstrecken.

5. Fettspritze nach Anspruch 4, wobei die Rille (112) des Verbindungsstücks (11) dafür eingerichtet ist, mit einem oberen Flansch (42) einer Fettstange (4a) verbunden zu sein.

6. Fettspritze nach Anspruch 1, wobei ein Innendurchmesser (D2) der zweiten Innengewindegänge (223) des Verbindungsrings (2) größer ist als ein Außendurchmesser (d2) der zweiten Außengewindegänge (251) des Adapters (25), und ein Innendurchmesser (D3) der dritten Innengewindegänge (252) des Adapters (25) eingerichtet ist, größer als ein Außendurchmesser (d3) des Verbindungshalses (401) der Fettstange (4c) zu sein.

7. Fettspritze nach Anspruch 1, wobei der Adapter (25) einen zweiten Aufnahmeraum (253) aufweist, der in seinem oberen Abschnitt definiert ist und mit dem eine zweite Dichtung (26) in Eingriff gebracht ist.

8. Fettspritze nach Anspruch 1, wobei der Kolben (32) einen Randleistenabschnitt (321) aufweist, der dafür eingerichtet ist, in enganliegendem Kontakt mit einem Inneren der Fettstange (4a/4b/4c) zu sein.

## Revendications

1. Pistolet graisseur avec lequel des bâtons de graisse de différentes tailles peuvent coopérer, ledit pistolet graisseur comprenant :
un corps (1) ayant un passage (10) relié à celui-ci, un raccord (11) relié à une extrémité distale du passage (10), des premiers filets internes (111) définis dans une périphérie interne du raccord (11), une gorge (112) définie dans la périphérie interne du raccord (11) ;
une bague de liaison (2) ayant une bride (21) et un col s'étendant à partir de la bride (21), un trou étagé (22) défini dans la bague de liaison (2) et composé d'un premier trou (221) et d'un second trou (222) qui est plus petit que le premier trou (221), le premier trou (221) ayant des deuxièmes filets internes (223) définis dans une périphérie interne de celui-ci, la bride (21) étant reçue dans le raccord (11) ; et
un tube (3) ayant des premiers filets externes (31) définis dans une première extrémité de celui-ci, les premiers filets externes (31) du tube (3) étant reliés par vissage aux premiers filets internes (111) du raccord (11), un piston (32) apte à être placé dans une extrémité inférieure d'un bâton de graisse dans le tube (3), et placé de manière correspondante à une seconde extrémité du tube (3),
**caractérisé par le fait que** le pistolet graisseur comprend en outre un adaptateur (25) ayant des seconds filets externes (251) définis dans une périphérie externe de celui-ci et adaptés pour être reliés aux deuxièmes filets internes (223) de la bague de liaison (2), et des troisièmes filets internes (252) définis dans une périphérie interne de celui-ci et adaptés pour être reliés par vissage à un bâton de graisse (4c),
lesdits deuxièmes filets internes (223) de la bague de liaison (2) étant adaptés pour être reliés par vissage à un bâton de graisse (4b) ayant une taille différente de celle du bâton de graisse (4c).

2. Pistolet graisseur selon la revendication 1, dans lequel la bague de liaison (2) a une première chambre de réception (23) définie dans une partie supérieure de celle-ci, et un premier joint d'étanchéité (24) est reçu à l'intérieur de la première chambre de réception (23) et de la gorge (112).

3. Pistolet graisseur selon la revendication 1, dans lequel les deuxièmes filets internes (223) de la bague de liaison (2) sont adaptés pour être reliés par vissage au bâton de graisse (4b), un diamètre interne (D1) des premiers filets internes (111) dans le raccord (11) est plus grand qu'un diamètre externe (d1) des premiers filets externes (31) du passage (3).

4. Pistolet graisseur selon la revendication 1, dans lequel un diamètre externe de la bride (21) du raccord (2) est plus grand qu'un diamètre interne du passage (3), la bride (21) a des filets externes (211) définis dans une périphérie externe de celle-ci, de multiples nervures (212) s'étendant à partir d'un côté inférieur de la bride (21).

5. Pistolet graisseur selon la revendication 4, dans lequel la gorge (112) du raccord (11) est adaptée pour être reliée à une bride supérieure (42) d'un bâton de graisse (4a).

6. Pistolet graisseur selon la revendication 1, dans lequel un diamètre interne (D2) des deuxièmes filets internes (223) de la bague de liaison (2) est plus grand qu'un diamètre externe (d2) des seconds filets externes (251) de l'adaptateur (25), un diamètre interne (D3) des troisièmes filets internes (252) de l'adaptateur (25) est adapté pour être plus grand qu'un diamètre externe (d3) du col de liaison (401) du bâton de graisse (4c).

7. Pistolet graisseur selon la revendication 1, dans lequel l'adaptateur (25) a une seconde chambre de réception (253) définie dans une partie supérieure de celui-ci, avec laquelle un second joint d'étanchéité (26) est engagé.

8. Pistolet graisseur selon la revendication 1, dans lequel le piston (32) a une partie jupe (321) qui est adaptée pour être en contact de manière ajustée avec l'intérieur du bâton de graisse (4a/4b/4c).
